# EUROPÄISCHE PATENTSCHRIFT

(11) **EP 2 040 319 B1**
(45) Veröffentlichungstag und Bekanntmachung des Hinweises auf die Patenterteilung: **10.08.2016**
(21) Anmeldenummer: 07017817.3
(22) Anmeldetag: 12.09.2007
(51) Int. Cl.: H01M 2/04

(54) **Deckel für ein Gehäuse eines Akkumulators**
Cover for a battery casing
Couvercle pour un boîtier d'accumulateur

(43) Veröffentlichungstag der Anmeldung: 25.03.2009
(73) Patentinhaber: HOPPECKE Batterien GmbH & Co. KG, 59929 Brilon (DE)
(72) Erfinder: Kesper, Heinrich, 34508 Willingen (DE)
(74) Vertreter: Stenger Watzke Ring

(56) Entgegenhaltungen:
- DE-A1- 2 109 499
- DE-C1- 19 839 211
- US-A- 3 657 020
- US-A- 4 207 387

## Beschreibung

Die vorliegende Erfindung betrifft einen Deckel für ein Gehäuse eines Akkumulators, der elektrolytische Zellen aufweist, wobei im Deckel ein Kanalsystem integriert ist.

Gattungsgemäße Akkumulatoren werden als Energiespeicher für hohe Leistungsanforderungen im Traktionsbereich eingesetzt, so beispielsweise bei Gabelstaplern, elektrischen Hubeinrichtungen und dergleichen. Sie sind häufig als Blei-Säure-Akkumulatoren ausgebildet. Derartige Akkumulatoren weisen hochbelastbare Zellen auf, die darüber hinaus mit großen Strömen beaufschlagt werden können. Solche Akkumulatoren sind deshalb teuer, so daß die Wartung einzelner Zellen vorgesehen ist. Im Stand der Technik ist es üblich, daß jede Zelle für sich einen eigenen Deckel aufweist, über den diese Zelle zugänglich ist und gewartet werden kann. Ein wichtiger Wartungspunkt betrifft das Nachfüllen von Wasser zum Elektrolyten,

Ein beachtenswerter Punkt bezüglich der gattungsgemäßen Akkumulatoren ist, daß aufgrund der hohen Beanspruchung der Elektrolyt einem hohen Verlust an Wasser ausgesetzt ist. Das insbesondere beim Laden eines solchen Akkumulators, der vorzugsweise als Blei-Säure-Akkumulator ausgebildet ist, entstehende Knallgas wird über eine entsprechende Entlüftungseinrichtung an die Umgebung abgeleitet. Der hierdurch entstehende Verlust an Wasser führt zu einer unerwünschten Erhöhung der Säurewichte sowie zu reduzierten elektrischen Eigenschaften. Eine regelmäßige Überprüfung des Elektrolyten hinsichtlich Wasserverlust ist deshalb erforderlich. Bei dem zugeführten Wasser handelt es sich vorzugsweise um destilliertes Wasser mit entsprechender Reinheit.

Um die Wassernachfüllung zu vereinfachen, ist es bekannt, jede Zelle mit einem Schlauch zu versehen. Diese können untereinander verbunden sein. Sollen einzelne Zellen gewartet oder repariert werden, so ist neben einer Demontage der jeweiligen Zellendeckel auch der entsprechende Schlauch zu demontieren.

Aus dem Stand der Technik ist ferner gemäß der US 3,657,020 ein Deckel einer Batterie bekannt, der aus einem transparenten Material gebildet ist, so dass von außen der Elektrolytpegel der jeweiligen Zelle abgelesen werden kann. Dabei enthält der Deckel für jede Zelle eine nach außen hin offene Öffnung. Es sind zudem Zellstopfen vorgesehen, die in entsprechende Öffnungen eingesetzt sind, wobei im Bereich der Stopfen eine kanalartige Vertiefung vorgesehen ist, die derart ausgebildet ist, dass die Stopfen eine obere Abmessung des Deckels nicht überragen.

Aus der DE 21 09.499 A1 ist ein Akkumlator mit einem Akkumulatordeckel bekannt, der einstückig angeformte Füllstutzen für jede Zelle aufweist. Diesen ist jeweils ein Belüftungskanal zugeordnet, die in eine Sammelleitung münden, so dass ein gleichzeitiges Füllen der Zellen mit Elektrolyt auf die gewünschte Höhe erfolgen kann.

Die US 4,207,387 beschreibt einen Akkumulatordeckel für einen Akkumulator mit einer Vielzahl von elektrolytischen Zellen, wobei auf dem Akkumulatordeckel ein gemeinsamer Entlüftungskanal für die elektrolytischen Zellen vorgesehen ist. Der Akkumulatordeckel enthält ferner für jede Zelle eine Entlüftungsöffnung, die über eine labyrinthartige Führung das Austreten von Elektrolyt aus der Zelle weitgehend reduziert.

Die DE 198 39 211 C1 offenbart einen Wassernachfüllstopfen, der in einen Anschlussstutzen eines Deckels für einen Akkumulator einsetzbar ist. Der Wassernachfüllstopfen vveist ein Ventil auf, mit dem die Nachführung von destilliertem Wasser in den Elektrolyten geregelt wird. Darüber hinaus weist der Wassernachfüllstopfen zwei Flansche auf, an die ein Wasserführungssystem angeschlossen werden kann, durch welches die Zellen miteinander verbunden werden können, so dass ihnen gemeinsam Wasser zugeführt werden kann.

Die Erfindung hat es zur **Aufgabe** gemacht, hier eine Verbesserung zu erreichen.

Als **Lösung** wird mit der Erfindung ein Deckel der eingangs genannten Art vorgeschlagen, der sich dadurch auszeichnet, dass mittels des Kanalsystems die Zellen strömungstechnisch miteinander verbunden sind, so dass auf jede Zelle über das Kanalsystem zugegriffen und den Zellen destilliertes Wasser über das Kanalsystem zugeführt werden kann, ohne dass die Zellen geöffnet werden müssten oder der Deckel entfernt werden müsste.

Unter dem Begriff Deckel ist im Sinne der Erfindung nicht nur der umgangssprachliche Deckel zu verstehen, sondern darüber hinaus auch ein Abdeck- oder Zwischenelement, in welchem das Kanalsystem integriert ausgebildet ist. Dieses Element kann von einem weiteren, äußeren Deckel abgedeckt oder aufgenommen sein. Auf diese Weise ist es gegenüber dem Stand der Technik nicht mehr erforderlich, jede Zelle einzeln mit Wasser zu befüllen. Darüber hinaus erlaubt die Erfindung ferner, daß der Wartungsschritt des Befüllens der Zellen mit Wasser automatisiert werden kann, denn auf jede Zelle kann über das Kanalsystem zugegriffen werden. Das Vorsehen von Schläuchen kann vollständig eingespart werden. Insbesondere wenn der Deckel aus Kunststoff, beispielsweise im Spritzgußverfahren hergestellt wird, kann das Kanalsystem auf einfache Weise mit integriert werden. Kosten und Montageaufwand können eingespart werden. Das Kanalsystem ist im Deckel integriert ausgebildet, insbesondere innerhalb einer Wand des Deckels, so daß zusätzliche Bauteile weitgehend vermieden werden können. Das Kanalsystem kann ferner Verzweigungen aufweisen, die in die jeweiligen Zellen münden. Natürlich können daneben oder zusätzlich auch separate Kanalsystembauelemente vorgesehen sein, beispielsweise Röhren, Schläuche oder dergleichen. Darüber hinaus kann der Deckel natürlich auch einstückig mit den einzelnen Zellendeckeln ausgebildet sein, um eine weitere Vereinfachung zu erreichen.

Vorzugsweise weist der Deckel einen Wasseranschluß auf, an dem das Kanalsystem mündet. So kann lediglich durch einen einzigen Wasseranschluß eine wassertechnische Wartung aller Zellen gemeinsam erreicht werden. Insbesondere ist der Wasseranschluß derart ausgebildet, daß er mit einfachen Mitteln mit einem Wasserversorgungsanschluß gekoppelt werden kann. Hierdurch kann die Zuverlässigkeit weiter verbessert werden, da zum Befüllen sämtlicher Zellen lediglich ein einziger Wasseranschluß erforderlich ist. Besonders vorteilhaft ist es deshalb, wenn das Kanalsystem den Wasseranschluß mit jeder Zelle verbindet.

In einer vorteilhaften Weiterbildung wird vorgeschlagen, daß der Deckel eine Ventileinheit aufweist, mittels der die einer Zelle zugeführte Wassermenge steuerbar ist.

Die Ventileinheit kann beispielsweise mittels eines in der jeweiligen Zelle angeordneten Schwimmers oder dergleichen gesteuert werden. Sie kann als ein Sperrventil, ein Wegeventil oder dergleichen ausgebildet sein. Natürlich kommt auch eine elektrische oder pneumatische Steuerung in Frage, die mittels eines geeigneten Sensors den Elektrolytpegel der jeweiligen Zelle erfaßt und die Ventileinheit entsprechend der nachzuführenden Wassermenge ansteuert. Auf diese Weise kann automatisch immer die korrekte Füllhöhe des Elektrolyten in der Zelle erreicht werden.

Um die Steuerung der Zuführung von Wasser zur Zelle zu automatisieren, wird vorgeschlagen, daß der Deckel eine Meßeinheit aufweist, mittels der ein Elektrolytpegel einer Zelle erfaßbar ist. Vorzugsweise wird der Meßwert bezüglich des Elektrolytpegels der Zelle abrufbar gespeichert. Die Meßeinheit kann lediglich in einem geeigneten Sensor bestehen. Sie kann aber auch eine weitere Auswerteeinheit umfassen, um einen vom Sensor gelieferten Meßwert für die weitere Verarbeitung aufzubereiten. In Verbindung mit einer automatischen Steuerung kann die Ventileinheit dann derart gesteuert werden, daß ein optimaler Elektrolytfüllpegel der Zelle erreichbar ist. Diese Ausgestaltung erlaubt es ferner, den Akkumulator auch während des Betriebs hinsichtlich des Elektrolytpegels zu überwachen. Gegebenenfalls können entsprechende Meldungen ausgegeben werden, so beispielsweise über Funk an eine Zentrale, an eine Anzeigeeinheit oder dergleichen. Natürlich kann auch vorgesehen sein, daß, wenn ein entsprechendes Wasserreservoir im Deckel mitgeführt wird, während des bestimmungsgemäßen Betriebs automatisch ein Nachfüllen von Wasser in die jeweilige Zelle bei Bedarf erfolgt. Ist der Wasservorrat erschöpft, erfolgt eine Meldung.

In einer weiteren Ausgestaltung der Erfindung wird vorgeschlagen, daß der Deckel ein Sperrventil aufweist. Mit dem Sperrventil soll erreicht werden, das Elektrolyt während des bestimmungsgemäßen Betriebs nicht über das Kanalsystem die Zelle verlassen kann. Vorzugsweise ist deshalb für jede Zelle im relevanten Zweig des Kanalsystems ein entsprechendes Sperrventil angeordnet. Das Sperrventil kann ebenfalls steuerbar ausgebildet sein, so daß es beim Befüllen automatisch in die geöffnete Stellung verfahren werden kann. Auf diese Weise kann eine hohe Betriebszuverlässigkeit auch bei rauhem Umgebungsbetrieb erreicht werden, bei dem der Akkumulator hohen Beschleunigungen sowie Schräglagen ausgesetzt ist.

Eine Weiterbildung der Erfindung schlägt vor, daß das Kanalsystem zur Abführung von Gas geeignet ist. Als Gas ist hier insbesondere das während des Ladevorgangs entstehende Knallgas gemeint, für welches in der Regel eine Entlüftungseinrichtung vorhanden ist. Die Erfindung erlaubt es nunmehr, daß jede Zelle ein Entlüftungsventil aufweist, welches mit dem Kanalsystem verbunden sein kann. Ein separates Entlüftungskanalsystem kann deshalb eingespart werden. Vorzugsweise kann das Entlüftungsventil mit dem Sperrventil gekoppelt ausgebildet sein. Hierdurch kann eine weitere Vereinfachung erreicht werden. Kosten können eingespart werden.

Gemäß einer weiteren Ausgestaltung wird vorgeschlagen, daß für jede Zelle ein Verschlußstopfen vorgesehen ist. Mit dem Verschlußstopfen kann für jede Zelle eine verschließbare Öffnung bereitgestellt werden, über die direkter Zugriff auf den Elektrolyten möglich ist. So kann beispielsweise mit bekannten Mitteln während eines Wartungszustands die Elektrolytwichte ermittelt werden.

Vorzugsweise ist der Deckel mit dem Gehäuse fest verbunden, so daß ein hoch beanspruchbarer Akkumulator erreicht werden kann.

In einer Weiterbildung wird vorgeschlagen, daß der Wasseranschluß mit einem Ladeanschluß einstückig ausgebildet ist. Diese Ausgestaltung erlaubt es, mit nur einer Steckvorrichtung den Akkumulator bezüglich Wartungszwecke anzuschließen. So kann vorgesehen sein, daß der Akkumulator beispielsweise während Betriebspausen an einer Ladestation angeschlossen wird, welche neben einer Ladung des Akkumulators zugleich auch eine Überprüfung des Elektrolytpegels jeder Zelle ermöglicht. Gegebenenfalls veranlaßt die Ladeeinrichtung eine Zuführung von Wasser. Auf diese Weise kann eine vollständige Wartung des Akkumulators mit einfachen Mitteln erreicht werden. Die Anschlußsicherheit kann weiter verbessert werden, wenn der Anschluß mit einer Codierung versehen ist, so daß die einzelnen elektrischen Anschlüsse beziehungsweise der Wasseranschluß nicht miteinander vertauscht werden können. Die Sicherheit kann weiter verbessert werden.

Weitere Vorteile und Merkmale sind der folgenden Beschreibung eines Ausführungsbeispiels zu entnehmen. Im wesentlichen gleichbleibende Bauteile sind mit den gleichen Bezugszeichen bezeichnet. Die Figuren sind Schemazeichnungen und dienen lediglich der Erläuterung des folgenden Ausführungsbeispiels.

Es zeigen:
- Fig. 1: schematisch eine perspektivische Draufsicht auf einen Deckel gemäß der Erfindung,
- Fig. 2: schematisch einen Schnitt durch den Deckel gemäß Fig. 1 und
- Fig. 3: schematisch einen Ausschnitt des Deckels aus Fig. 1 in vergrößerter Darstellung mit einer Verbindungsleiste zur Verbindung mit einem Anschlußbereich des Deckels.

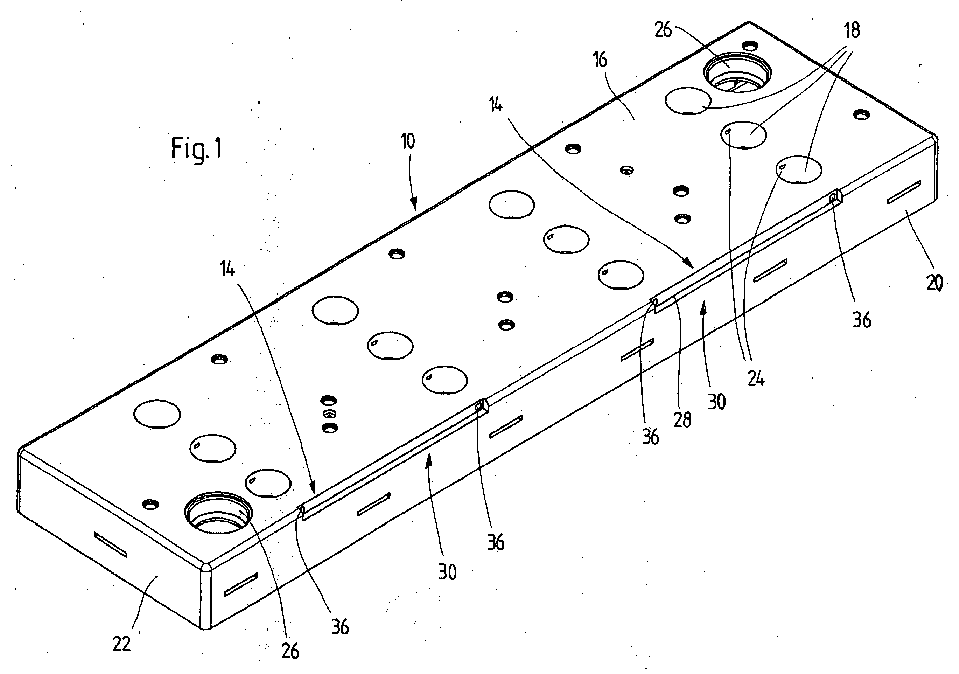

Aus Fig. 1 ist ein erfindungsgemäßer Deckel 10 in schematisch perspektivischer Ansicht ersichtlich. Der Deckel 10 weist eine obere, im wesentlichen ebene Deckelwand 16 auf, an deren Rändern Stege 20, 22 nach unten ragend angeformt sind. Die Stege 20, 22 dienen zur Verbindung mit nicht näher dargestellten Wänden eines Akkumulatorgehäuses.

In der Deckelwand 16 ist ferner für jede Zelle eine mit einem nicht näher bezeichneten Stopfen verschließbare Öffnung 18 angeordnet. Ferner weist die Deckelwand 16 in diagonal gegenüberliegenden Eckbereichen jeweils eine Poldurchführung 26 für die beiden Anschlußpole des Akkumulators auf.

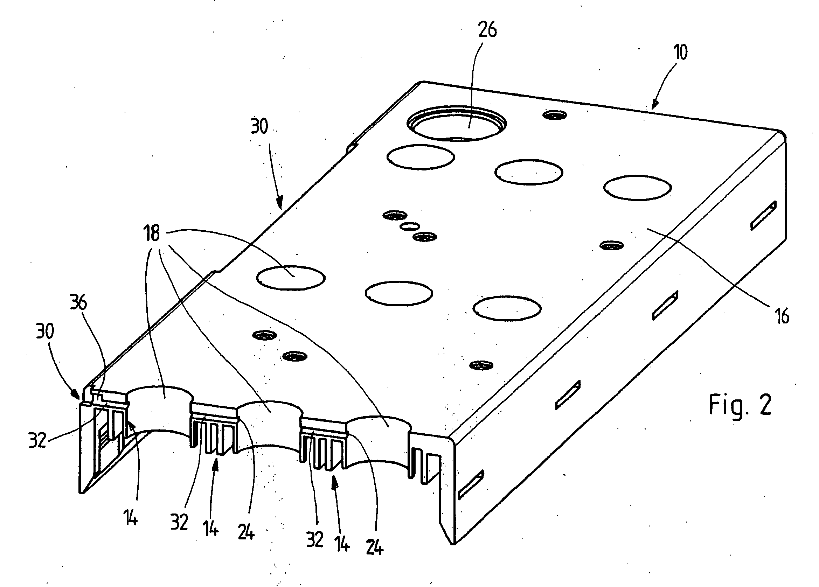

Wie aus Fig. 1 femer ersichtlich ist, münden in die Öffnungen 18 Mündungen 24 eines Kanalsystems 14. Die Mündungen 24 sind über das Kanalsystem 14 miteinander in fluidtechnischer Verbindung. Dies ist insbesondere aus Fig. 2 ersichtlich, in deren Darstellung der vorderen Schnittkante einzelne Kanäle 32 des Kanalsystems 14 zwischen den Öffnungen 18 zu erkennen sind. Das Kanalsystem 14 weist ferner einen Anschlußbereich 30 auf, der vorliegend im Verbindungsbereich der Deckelwand 16 mit den Stegen 20, 22 ausgebildet ist.

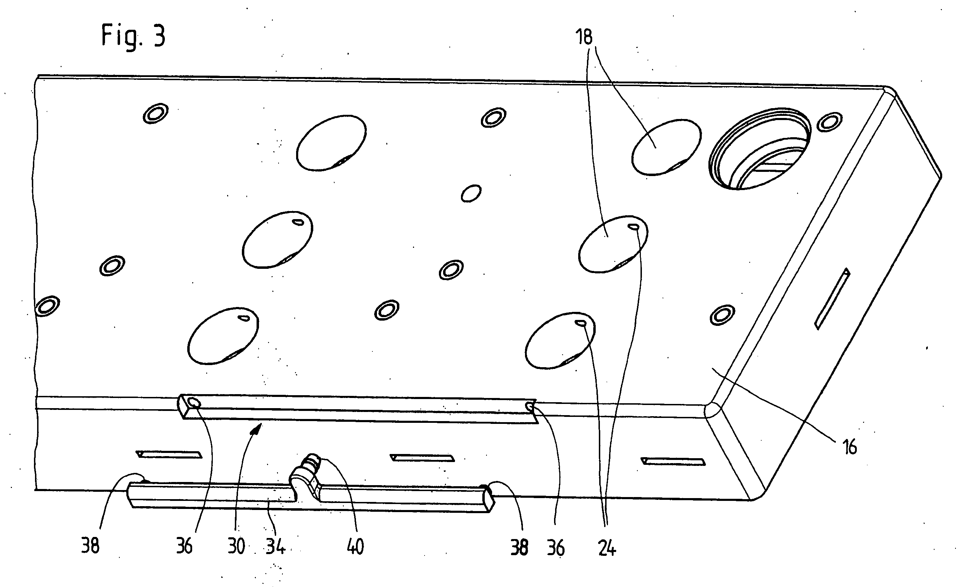

Der Anschlußbereich 30 ist zur Verbindung mit einer Verbindungsleiste 34 ausgebildet. Hierzu ist im Anschlußbereich 30 der Deckelwand 16 eine Bohrung 36 vorgesehen, die in den Kanal 32 mündet. In die Bohrung 36 ist ein Verbindungsstopfen 38 der Verbindungsleiste 34 einführbar, wodurch eine flüssigkeitstechnische Verbindung zwischen einem nicht weiter bezeichneten Kanalsystem der Verbindungsleiste 34 und dem Kanalsystem 14 des Deckels 10 herstellbar ist. Der Verbindungsstopfen 38 weist nicht näher bezeichnete Dichtungslippen auf, die zugleich eine mechanische Verbindung der Verbindungsleiste 34 mit dem Deckel 10 bewirken. Das Kanalsystem der Verbindungsleiste 34 weist vorliegend zwei zueinander beabstandet angeordnete Verbindungsstopfen 38 auf, die flüssigkeitstechnisch über das Kanalsystem mit einem Anschlußflansch 40 der Verbindungsleiste 34 verbunden sind (Fig. 3). An dem Anschlußflansch 40 kann eine Flüssigkeitsquelle für destilliertes Wasser angeschlossen werden. Über das Kanalsystem der Verbindungsleiste 34 sowie das Kanalsystem 14 des Deckels 10 kann den Zellen somit destilliertes Wasser zur Ergänzung des Elektrolyten zugeführt werden, ohne daß die Zellen geöffnet werden müßten oder der Deckel 10 entfernt werden müßte.

In den Figuren nicht dargestellt ist der Verschlußstopfen für die jeweilige Zelle, der ein Dosierungsventil enthält, mittels dem die Menge des zuzuführenden Wassers steuerbar ist. Der Verschlußstopfen weist ein ebenfalls nicht dargestelltes Sensorelement auf, welches von einem Elektrolytpegel der jeweiligen Zelle gesteuert wird. Erreicht der Elektrolytpegel in der jeweiligen Zelle seine vorgeschriebene Höhe, wird das Ventil in den gesperrten Zustand verfahren. In diesem Zustand kann kein weiteres Wasser zugeführt werden. Unterschreitet der Elektrolytpegel einen ebenfalls vorgebbaren Wert, wird das Ventil geöffnet und Wasser kann nachgefüllt werden.

In der vorliegenden Ausgestaltung ist vorgesehen, daß das Kanalsystem 14 permanent mit Wasser beaufschlagt ist. Auf diese Weise kann der Elektrolytpegel in den einzelnen Zellen im wesentlichen konstant gehalten werden. Eine hohe Verfügbarkeit des Akkumulators kann erreicht werden. Nicht zu erkennen ist ferner ein gemeinsamer Wasseranschluß, über den dem Kanalsystem 14 Wasser zugeführt wird.

Das in den Figuren dargestellte Ausführungsbeispiel dient lediglich der Erläuterung der Erfindung und ist für diese nicht beschränkend.

### Bezugszeichenliste

- 10: Deckel
- 14: Kanalsystem
- 16: Deckelwand
- 18: Öffnung
- 20: Steg
- 22: Steg
- 24: Mündung
- 26: Poldurchführung
- 28: Sammelkanal
- 30: Anschlußbereich
- 32: Kanal
- 34: Verbindungsleiste
- 36: Bohrung
- 38: Verbindungsstopfen
- 40: Anschlußflansch

## Patentansprüche

1. Deckel (10) für ein Gehäuse eines Akkumulators, der elektrolytische Zellen aufweist, wobei im Deckel (10) ein Kanalsystem (14) integriert ist,
**dadurch gekennzeichnet,**
**daß** mittels des Kanalsystem (14) die Zellen strömungstechnisch miteinander verbunden sind, so daß auf jede Zelle über das Kanalsystem zugegriffen und den Zellen destilliertes Wasser über das Kanalsystem (14) zugeführt werden kann, ohne daß die Zellen geöffnet werden müßten oder der Deckel (10) entfernt werden müßte.

2. Deckel nach Anspruch 1, **gekennzeichnet durch** einen Wasseranschluß, an dem das Kanalsystem (14) mündet.

3. Deckel nach Anspruch 1 oder 2, **dadurch gekennzeichnet, daß** das Kanalsystem den Wasseranschluß mit jeder Zelle verbindet.

4. Deckel nach einem der Ansprüche 1 bis 3, **gekennzeichnet durch** eine Ventileinheit, mittels der die einer Zelle zugeführte Wassermenge steuerbar ist.

5. Deckel nach einem der Ansprüche 1 bis 4, **gekennzeichnet durch** eine Meßeinheit, mittels der ein Elektrolytpegel einer Zelle erfaßbar ist.

6. Deckel nach einem der Ansprüche 1 bis 5, **gekennzeichnet durch** ein Sperrventil.

7. Deckel nach einem der Ansprüche 1 bis 6, **dadurch gekennzeichnet, daß** das Kanalsystem zur Abführung von Gas geeignet ist.

8. Deckel nach einem der Ansprüche 1 bis 7, **dadurch gekennzeichnet, daß** für jede Zelle ein Verschlußstopfen vorgesehen ist.

9. Deckel nach einem der Ansprüche 1 bis 8, **dadurch gekennzeichnet, daß** der Wasseranschluß mit einem Ladeanschluß einstückig ausgebildet ist.

## Claims

1. A cover (10) for a casing of an accumulator which comprises electrolytic cells, wherein a channel system (14) is integrated in the cover (10),
**characterized in**
**that** the cells are fluidically connected to each other by means of the channel system (14), such that each cell can be accessed via the channel system and the cells can be supplied with distilled water via the channel system (14) without the cells having to be opened or the cover (10) having to be removed.

2. A cover according to claim 1, **characterized by** a water connection, in which the channel system (14) ends.

3. A cover according to claim 1 or 2, **characterized in that** the channel system connects the water connection to each cell.

4. A cover according to one of the claims 1 through 3, **characterized by** a valve unit, by means of which the quantity of water supplied to a cell can be controlled.

5. A cover according to one of the claims 1 through 4, **characterized by** a measuring unit, by means of which an electrolyte level of a cell can be detected.

6. A cover according to one of the claims 1 through 5, **characterized by** a stop valve.

7. A cover according to one of the claims 1 through 6, **characterized in that** the channel system is adapted for gas evacuation.

8. A cover according to one of the claims 1 through 7, **characterized in that** a closing plug is provided for each cell.

9. A cover according to one of the claims 1 through 8, **characterized in that** the water connection is integrally formed with a charging connection.

## Revendications

1. Couvercle (10) pour un boîtier d'un accumulateur, qui comprend des cellules électrolytiques, un système de canaux (14) étant intégré dans le couvercle (10),
**caractérisé en ce**
**que** les cellules sont reliées l'une à l'autre de manière fluidique par moyen du système de canaux (14), de sorte qu'on peut accéder à chaque cellule via le système de canaux et les cellules peuvent être alimentées en eau distillée via le système de canaux (14) sans qu'il faille ouvrir les cellules ou sans qu'il faille enlever le couvercle (10).

2. Couvercle selon la revendication 1, **caractérisé par** un raccord d'eau, dans lequel débouche le système de canaux (14).

3. Couvercle selon la revendication 1 ou la revendication 2, **caractérisé en ce que** le système de canaux relie le raccord d'eau à chaque cellule.

4. Couvercle selon l'une des revendications 1 à 3, **caractérisé par** une unité de soupapes, par moyen de laquelle on peut commander la quantité d'eau amenée à une cellule.

5. Couvercle selon l'une des revendications 1 à 4, **caractérisé par** une unité de mesure, par moyen de laquelle on peut détecter un niveau d'électrolyte d'une cellule.

6. Couvercle selon l'une des revendications 1 à 5, **caractérisé par** une vanne d'arrêt.

7. Couvercle selon l'une des revendications 1 à 6, **caractérisé en ce que** le système de canaux est adapté à évacuer les gaz.

8. Couvercle selon l'une des revendications 1 à 7, **caractérisé en ce qu'**un bouchon d'obturation est prévu pour chaque cellule.

9. Couvercle selon l'une des revendications 1 à 8, **caractérisé en ce que** le raccord d'eau est d'un seul tenant avec une prise de charge.
